Europäisches Patentamt

European Patent Office

Office européen des brevets

(11) Publication number: **0 165 469**

**A2**

# EUROPEAN PATENT APPLICATION

(21) Application number: 85105987.3

(22) Date of filing: 15.05.85

(51) Int. Cl.⁴: **C 04 B 28/02**
C 04 B 41/50, C 04 B 41/52
//(C04B28/02, 24:08, 24:24,
24:38)

(30) Priority: 19.05.84 JP 99719/84
25.06.84 JP 129374/84

(43) Date of publication of application:
27.12.85 Bulletin 85/52

(84) Designated Contracting States:
BE CH DE FR GB IT LI NL SE

(71) Applicant: NIPPON PRESTON CO., LTD.
12-21, Heiwamachi
Chigasaki-shi Kanagawa(JP)

(72) Inventor: Chitoshi, Jinno
4-5-205, Chigasaki 2-chome
Chigasaki-shi Kanagawa(JP)

(74) Representative: Lehn, Werner, Dipl.-Ing. et al,
Hoffmann, Eitle & Partner Patentanwälte Arabellastrasse
4 (Sternhaus)
D-8000 München 81(DE)

(54) Coating composition capable of forming ceramic-like coating and method of preparing such coating composition.

(57) The particular coating composition containing a cement, an ingredient (A) and an ingredient (B) which contains a rubber latex is disclosed. Ingredient (A) contains several ingredients which include (1) an aggregate-forming powder, (2) a water-soluble cellulose derivative, and (3) a metal salt of a higher fatty acid. When applied to a substrate, the coating composition provides a durable surface which has improved water-proof properties, increased resistance to scratching or surface marring, and color fading. A method for preparing the above-described coating composition is also disclosed. The coating composition of the invention may be applied to a substrate, such as by spraying to form a coating which, when set or hardened, provides a durable, ceramic-like surface.

Croydon Printing Company Ltd.

42 056 u/кü

0165469

COATING COMPOSITION CAPABLE OF FORMING

CERAMIC-LIKE COATING AND METHOD OF

PREPARING SUCH COATING COMPOSITION

The present invention relates to a coating composition capable of forming a ceramic-like coating on a substrate surface without requiring firing, as well as a method of preparing such a coating composition. The present invention will find use in forming water-proof or decorative surfaces in civil engineering and construction work, as well as in manufacturing civil engineering or construction materials.

In the old days, the term "ceramic coating" was applied to those heat-resistant coatings which were formed on metallic materials by firing a glazc composed of a mixture of enamel frits and refractory materials. Today, this term is used to cover all coatings that are produced by various new coating techniques.

It is common practice to apply ceramic exterior tiles to the concrete wall of a building so as to improve its aesthetic appeal or provide water-proof surfaces. Ceramic tiles are also used to provide water-proof surfaces on the walls and floors of lavatories, kitchens, launderies and baths. However, all ceramics are manufactured by firing a glazed body. The production of ceramic tiles is not an exception and involves an intricate step of firing the tile body. Therefore, much labor and cost are required to provide decorative or water-proof surfaces by attaching ceramic tiles to the exteriors or interior walls or floors of a building.

It·is also common practice to line the metal surface with glass or provide it with an enamel coating. Here again, formation of the glass lining or enamel coating involves a labor-intensive and costly step of melting the raw material mix on the metal surface.

The present inventor made various studies to develop a simple process for producing a ceramic-like water-proof tile without involving the intricate step of firing the body or melting the raw material in a kiln. As a result, the inventor has found the following: when a coating composition prepared, for example, by mixing a cement with an aggregate-forming powder and a powder mixture of methyl cellulose and calcium stearate, followed by addition of an SBR latex and water is applied to a substrate such as a slate, a concrete block, a concrete panel or a metal plate, a coating having an appearance and properties similar to those of a ceramic is formed. Such a coating composition is capable of forming the same kind of coating on other substrates such as moldings of foamed plastics and other plastics, as well as wood board. The present invention has been accomplished on the basis of these findings.

The present invention is directed to a coating composition which is capable of forming a ceramic-like coating or surface on a substrate to which it is applied.

The particular coating composition contains a cement, an ingredient (A) and an ingredient (B) which contains a rubber latex. Ingredient (A) contains several ingredients which include (1) an aggregate-forming powder, (2) a water-soluble cellulose derivative, and (3) a metal salt of a higher fatty acid. When applied to a substrate, the coating composition provides a durable surface which has improved water-proof properties, increased resistance to scratching or surface marring, and color fading.

Also included within the scope of the present invention is a method of preparing the above-described coating composition. For example, ingredient (A) and a cement are mixed and blended together and, to the resulting mixture, ingredient (B) containing a rubber latex is added. This coating composition may then be applied to a substrate, such as by spraying to form a coating which, when set or hardened, provides a durable, ceramic-like surface.

In one embodiment of the present invention, a coating of the coating composition formed on the substrate

- 4 -

0165469

surface is first hardened and then, a paint capable of forming a transparent glossy coating is applied to the hardened coating, thereby providing a coating having an appearance and properties closely resembling those of ceramics. An example of the paint capable of forming a transparent glossy coating is an acrylic or urethane resin emulsion.

One object, therefore, of the present invention is to provide a coating composition capable of forming a ceramic-like coating on the surface of any substrate by simple procedures without requiring a firing step.

Another object of the present invention is to provide a method of preparing a coating composition capable of forming a ceramic-like coating on the surface of any substrate by simple procedures without requiring a firing step.

Still another object of the present invention is to provide a method of forming of a coating having a ceramic-like appearance and properties by simple procedures without requiring a firing step.

In accordance with the present invention, a cement is mixed with a cement admixture containing an aggregate-forming powder, a cellulose derivative and a metal salt of a higher fatty acid. A rubber latex and water are added to the mixture to form a coating composition which is then applied to a substrate to form a coating. If the proportion of water present in the rubber latex is high, the water is not always added, however. This coating is then set and hardened to form a ceramic-like coating on the substrate surface.

A paint composition capable of forming a transparent glossy coating may be further applied to the so prepared ceramic-like coating, the resulting coating having an appearance and properties similar to those of ceramics.

The usual procedures for preparing the coating composition used in the present invention are as follows: 10 kg of the cement is mixed with a mixture of about 5 to 20 kg, preferably 12 to 17 kg, of the aggregate-forming powder, about 5 to 500 g, preferably 7 to 50 g, of the cellulose derivative, and about 10 to 1,000 g, preferably 100 to 500 g, of the metal salt of a higher fatty acid; to the resulting mixture, about 2 to 10 kg, preferably, 4 to 6 kg, of the rubber latex and about 2 to 10 kg, preferably 4 to 8 kg, of water (if desired) are added and the respective components are intimately mixed under agitation. If a colored ceramic-like coating is desired, a pigment or dye may be added to the so prepared coating composition. A fibrous material may also be incorporated in the coating composition in an amount of 10 to 1,000 g, preferably 100 to 600 g. The coating composition containing the fibrous material has the advantage of forming a tough and craze-resistant ceramic-like coating on a surface of the substrate.

The cement used in the preparation of the coating composition in accordance with the present invention forms a ceramic-like coating together with the aggregate-forming powder. Any ordinary cement may be used, and illustrative examples include Portland cement, high-early strength cement, moderate heat of hardening cement, white Portland cement, fly ash cement, Portland pozzolane cement, and Portland blast furnace slag cement. White Portland cement is particularly preferred.

The aggregate-forming powder is selected from among the powders of ordinary rocks such as granite, marble, serpentine, peridotite, zircon sand and limestone as well as those from silica sand and ceramic powders. Since most of the uses of the ceramic-like coating require water-proofness, powdered rock having a small degree of water absorption and ceramic powders are preferably used. The aggregate-forming powder may have any particle size, but particles whose sizes range from 30 to 400 mesh are preferred, with the size of 42 to 325 mesh being more preferred. In order to produce a ceramic-like coating having an appearance and properties similar to those of ceramics, a high degree of structural density and water-proofness are often required. To attain this end, the aggregate-forming powder preferably has a size distribution such that at least 20 wt% of the powder has particles finer than 100 mesh and at least 40 wt% of the powder has particles coarser than 100 mesh. The coarse particles are preferably made from ceramics.

By addition of the metal salt of a higher fatty acid, not only are the adhesion to the substrate and water-proof properties improved, but also a coating composition capable of smoother ejection from a spray gun can be obtained. Suitable metal salts of higher fatty acids include calcium stearate, magnesium stearate, zinc stearate, lead stearate, calcium palmitate, magnesium palmitate, zinc palmitate, lead palmitate, calcium laurate, magnesium laurate, zinc laurate, lead laurate, calcium oleate, magnesium oleate, zinc oleate and lead oleate. Among these, calcium stearate, zinc stearate, calcium palmitate and zinc palmitate are preferred.

By adding the cellulose derivative, not only is the adhesion of cement improved but also the viscosity of the coating composition is increased to facilitate the subsequent coating operation. Additionally, the coating composition can be applied to a near vertical substrate without causing running of the composition. Suitable cellulose derivatives include carboxymethyl cellulose, methyl cellulose, ethyl cellulose and cellulose acetate. Methyl cellulose and carboxymethyl cellulose are

- 8 -

0165469

preferred.

By addition of the rubber latex, the cement is given elasticity and its adhesion is improved. This contributes to providing a ceramic-like coating having an appearance and properties similar to those of ceramics. All types of natural and synthetic rubber latices may be used, and they include natural rubber latex, styrene-butadience rubber (SBR) latex, butadiene rubber (BR) latex, isoprene rubber (IR) latex, chloroprene rubber (CR) latex, acrylonitrile-butadiene rubber (NBR) latex, acrylic rubber (ACR, ANM) latex, and urethane rubber latex. Preferred examples are natural rubber latex, SBR latex, and NBR latex.

Fibrous materials may be incorporated into the coating composition in accordance with the present invention, whereby an impact-resistant and craze-resistant ceramic-like coating can be formed on the substrate surface. Suitable fibrous materials include Vinylon®, nylon, polyester fibers, polypropylene fiber, polyacrylonitrile fiber, alkali-resistant glass fibers, asbestos, rock wool, wollastonite, fibers of metal salts of titanic acid and other ceramic fibers. For economical and other reasons, Vinylon®, polyester fibers and alkali-resistant glass fibers are preferred.

The coating composition in accordance with the present invention may be applied to the substrate by any

conventional technique such as spray coating, brush coating, dip coating, cast coating, and even hand coating with a spatula. The simple spray coating is preferred since the coating composition, in spite of its high aggregate content, is adapted to spray coating and a ceramic-like coating having a good aesthetic appeal can be formed by this technique.

The coating composition of the present invention may be applied to any type of substrate such as concrete products, mortar products, foamed plastics, wood products, Silica Licite® (autoclaved lightweight concrete), metals, glass, as well as the wall, floor or ceiling of a building, more particularly, concrete panels, concrete blocks, mortar sheets, slates, concrete bricks, mortar bricks, foamed plastic sheets, foamed plastic moldings, wood products, metal products, flexible asbestos, calcium silicate sheets, and roofing tiles, as well as concrete walls, mortar walls, concrete floors, mortar floors of buildings, and concrete, mortar and asphalt pavement. The coating composition of the present invention is capable of forming a ceramic-like coating on any of these substrates.

The coating composition of the present invention may be applied to either a horizontal, vertical or inclined substrate. The coating composition can be easily applied to both sides of a vertical substrate.

A colored and hence more seemly ceramic-like coating may be formed on a substrate by applying a colored coating composition incorporating a pigment or a dye. The colored coating composition may be applied to the entire surface of the substrate, or it may be applied to a selected portion of the substrate so as to form a pattern. If a multi-colored coating is necessary, a plurality of coating compositions having different colors may be applied to the entire surface of the substrate, or they may be applied to selected portions of the substrate so as to provide a desired pattern. With spray coating, a two-tone pattern with a diffused borderline may be provided by first spraying a coating composition of one color and then applying a coating composition of the second color before the first coating hardens. The ceramic-like coating formed by the procedures described above may be provided with a ceramic-like appearance by forming a topcoat made of either a paint capable of forming a transparent glossy coating or a lustering agent.

When the substrate to which the coating composition of the present invention is left to stand at room temperature, the applied composition hardens in a few days to about a week to form a ceramic-like coating. This ceramic-like coating has good water-proofing properties and its surface has good aesthetic appeal. Therefore, this coating not only provides a decorative surface on the exterior of a building and on paved roads, but it can also provide products which can be used as a substitute for wall or floor tiles in lavatories, kitchens, baths and other places within a building that require cleaning with water.

In arctic areas, water in cracks in concrete or mortar freezes at subzero temperatures and thaws at higher temperatures; if this heat cycle is repeated a number of times, the concrete or mortar that is used in the pavement or foundation of a road, surveying markers denoting the border of a land plot, or the protecting or reinforcing walls used in embankments may often fail. Such trouble can be avoided by forming a completely water-tight ceramic-like coating on appropriate substrate in accordance with the present invention.

The following examples are given as further illustrations of the present invention and should not be construed as limiting.

### EXAMPLE 1

Preparation of Cement Admixture (A):

A cement admixture (60 kg) was prepared by intimately mixing 59.58 kg of a powder of kansui-seki (crystalline limestone) having the size distribution shown below, 60 g of methyl cellulose and 360 g of calcium stearate.

Particle size distribution of kansui-seki:

| +42 mesh | 3.00 wt% |

|          |            |
|----------|------------|
| +60 mesh  | 17.20 wt%  |
| +80 mesh  | 20.80 wt%  |
| +100 mesh | 10.75 wt%  |
| +200 mesh | 32.60 wt%  |
| +325 mesh | 14.50 wt%  |
| -325 mesh | 1.15 wt%   |

### EXAMPLE 2

#### Preparation of Cement Admixture (B):

A cement admixture (60 kg) was prepared by intimately mixing 59.28 kg of a powder of kansui-seki with the same particle size distribution as used in Example 1, 60 g of methyl cellulose, 360 g of calcium stearate and 300 g of waste Vinylon® fiber.

### EXAMPLE 3

#### Preparation of Coating Composition (1):

Portland cement (40 kg) was intimately mixed with 60 kg of cement admixture (A) prepared in Example 1. To the mixture, 20 kg of styrene-butadiene rubber (SBR) latex and 17 kg of water were added, and the respective components were intimately mixed to form 137 kg of coating composition (1).

### EXAMPLE 4

#### Preparation of Coating Composition (2):

Portland cement (40 kg) was intimately mixed with 60 kg of cement admixture (B) prepared in Example 2 and 30 g of a ceramic powder having the size distribution shown below. To the mixture, 20 kg of styrene-butadiene rubber (SBR) latex and 17 kg of water were added and the respective components were intimately mixed to form 167 kg of coating composition (2).

Size distribution of the ceramic powder:

| | |
|---|---|
| +42 mesh | 11.00 wt% |
| +70 mesh | 73.70 wt% |
| 70 to 100 mesh | 15.30 wt% |

### EXAMPLE 5

Preparation of Coating Composition (3):

60 kg of coating composition (1) prepared in Example 3 was intimately mixed with 500 g of a blue pigment, thereby producing 60.5 kg of a blue coating composition.

### EXAMPLE 6

Preparation of Coating Composition (4):

60 kg of coating composition (1) prepared in Example 3 was intimately mixed with 500 g of a red pigment so as to produce 60.5 kg of a red coating composition.

### EXAMPLE 7

Preparation of Coating Composition (5):

60 kg of coating composition (2) prepared in Example 4 was intimately mixed with 500 g of a blue pigment so as to produce 60.5 kg of a blue coating composition.

## EXAMPLE 8

Preparation of Coating Composition (6):

60 kg of coating composition (2) prepared in Example 4 was intimately mixed with 1 kg of a yellow pigment so as to produce 61 kg of a yellow coating composition.

## EXAMPLE 9

Preparation of Cement Admixture (C):

A cement admixture (60 kg) was prepared by intimately mixing 59.58 kg of a ceramic powder having the size distribution shown below, 60 g of methyl cellulose and 360 g of calcium stearate.

Particle size distribution of the ceramic powder:

| | |
|---|---|
| +42 mesh | 3.00 wt% |
| +60 mesh | 17.20 wt% |
| +80 mesh | 20.80 wt% |
| +100 mesh | 10.75 wt% |
| +200 mesh | 32.60 wt% |
| +325 mesh | 14.50 wt% |
| −325 mesh | 1.15 wt% |

## EXAMPLE 10

Preparation of Cement Admixture (D):

A cement admixture (60 kg) was prepared by intimately mixing 59.28 kg of a ceramic powder having the same particle size distribution as that used in Example 9, 60 g of methyl cellulose, 360 g of calcium stearate and 300 g of waste Vinylon® fiber.

## EXAMPLE 11

Preparation of Coating Composition (7):

Portland cement (40 kg) was intimately mixed with 60 kg of cement admixture (C) prepared in Example 9. To the resulting mixture, 20 kg of a styrene-butadiene rubber (SBR) latex and 17 kg of water were added and the respective components were intimately mixed to form 137 kg of coating composition (7).

## EXAMPLE 12

Preparation of Coating Composition (8):

Portland cement (40 kg) was intimately mixed with 60 kg of cement admixture (D) prepared in Example 10 and 30 kg of a particulate limestone having the size distribution shown below. To the resulting mixture, 20 kg of a styrene-butadiene rubber (SBR) latex and 17 kg of water were added and the respective components were intimately mixed to form 167 kg of coating composition (8).

Size distribution of limestone:

| | |
|---|---|
| +42 mesh | 11.00 wt% |
| +70 mesh | 73.70 wt% |
| 70 to 100 mesh | 15.30 wt% |

## EXAMPLE 13

Preparation of Coating Composition (9):

60 kg of coating composition (7) prepared in Example 11 was intimately mixed with 500 g of a blue pigment so as to form 60.5 kg of a blue coating composition.

## EXAMPLE 14

Preparation of Coating Composition (10):

60 kg of coating composition (7) prepared in Example 11 was intimately mixed with 500 g of a red pigment so as to form 60.5 kg of a red coating composition.

## EXAMPLE 15

Preparation of Coating Composition (11):

60 kg of coating composition (8) prepared in Example 12 was intimately mixed with 500 g of a blue pigment so as to form 60.5 kg of a blue coating composition.

## EXAMPLE 16

Preparation of Coating Composition (12):

60 kg of coating composition (8) prepared in Example 12 was intimately mixed with 1 kg of a yellow pigment so as to form 61 kg of a yellow coating composition.

## EXAMPLE 17

Formation of Ceramic-Like Coating on Vertical Concrete Slab by Spraying:

A concrete slab (200 x 50 x 15 cm) was erected in a nearly vertical position. Using an air-less spray gun, coating composition (1) prepared in Example 3 was applied to one side of the slab at a rate of 5.17 kg/m$^2$, thereby forming a coating in a thickness of 0.5 mm. Two days after the spraying, the hardening of the coating was completed. Thereafter, a topcoat of an acrylic resin emulsion was applied so as to form a coating having an appearance and properties similar to those of ceramics. The concrete slab having such ceramic-like coating was suitable for use on a building as a face sheet.

EXAMPLE 18

Formation (1) of Ceramic-Like Coating on Vertical Foamed Polystyrene Sheet by Spraying:

A foamed polystyrene sheet (100 x 50 x 2 cm) was erected in a nearly vertical position. Using an air-less spray gun, coating composition (1) prepared in Example 3 was applied to one side of the sheet at a rate of 2.34 kg/m$^2$, thereby forming a coating in a thickness of 1 mm. Three days after the spraying, the hardening of the coating was completed to provide a coating having an appearance and properties similar to those of ceramics. The foamed polystyrene sheet having such ceramic-like coating had good water-proofing properties and was well suitable for use on a building as a face sheet.

EXAMPLE 19

Formation (2) of Ceramic-Like Coating on Vertical Foamed Polystyrene Sheet by Spraying:

A foamed polystyrene sheet (100 x 50 x 2 cm) was erected in a nearly vertical position. Using an air-less spray gun, coating composition (2) prepared in Example 4 was applied to one side of the sheet at a rate of 1.40 $kg/m^2$. Immediately thereafter, coating composition (3) prepared in Example 5 was air-less sprayed onto the coated surface of the polystyrene sheet in stripes. Immediately after this second spraying, coating composition (2) prepared in Example 4 was again applied through an air-less spray gun at a rate of 0.94 $kg/m^2$, thereby forming a coating in a thickness of 1 mm. Three days after the final spraying, the hardening of the coating was completed. Thereafter, a topcoat of an acrylic resin emulsion was applied so as to form a coating having an appearance and properties similar to those of ceramics. The foamed polystyrene sheet having a blue striped pattern had good water-proofing properties and was suitable for use as a face sheet on the walls or floors of a building.

## EXAMPLE 20

Formation (1) of Decorative Ceramic-Like Coating on Concrete Structural Member:

An undercoat was formed on a concrete structural member and dried. To the dried undercoat, coating composition (1) prepared in Example 3 was applied through an air-less spray gun at a rate of 2.34 $kg/m^2$, thereby

forming a coating in a thickness of 1 mm. Three days after the spraying, the hardening of the coating was completed to provide a coating having an appearance and properties similar to those of ceramics. The so formed ceramic-like coating had sufficiently good water-proofing properties to be used as a decorative face on a building.

EXAMPLE 21

Formation (2) of Decorative Ceramic-Like Coating on Concrete Structural Member:

An undercoat was formed on a concrete structural member and dried. To the dried undercoat, coating composition (2) prepared in Example 4 was applied with a roller at a rate of 1.97 $kg/m^2$. Immediately thereafter, red coating composition (4) prepared in Example 6 was air-less sprayed in vertical stripes. Immediately after this second coating, composition (1) prepared in Example 3 was applied through an air-less spray gun at a rate of 0.84 $kg/m^2$, thereby forming a coating of a thickness of 1.2 mm having a red striped pattern. Three days after the final spraying, a topcoat of a red acrylic resin emulsion was applied so as to form a coating having an appearance and properties similar to those of ceramics. The so formed ceramic-like coating had a pleasing patterned surface and sufficiently good water-proofing properties to be used as a decorative face on the exterior of a building.

## EXAMPLE 22

### Formation of Ceramic-Like Coating on Cylindrical Foamed Polystyrene Vessel by Dip Coating:

A cylindrical foamed polystyrene vessel (100 mm$^{\phi}$ x 300 mm$^{H}$ x 10 mm$^{T}$) was dipped in 20 kg of coating composition (2) prepared in Example 4 in a vat, thereby forming a coating of a thickness of 1.5 mm on the outer surface of the vessel. Four days after the dip coating, the hardening of the coating was completed. Thereafter, a topcoat of an acrylic resin emulsion was applied so as to form a coating having an appearance and properties similar to those of ceramics. The cylindrical foamed polystyrene vessel with such ceramic-like coating was sufficiently water-tight to be immediately usable as a flower vase.

## EXAMPLE 23

### Formation of Ceramic-Like Coating on Horizontal Concrete Slab by Spraying:

A concrete slab (200 x 50 x 3 cm) was placed in a nearly horizontal position. Using an air-spray gun, coating composition (1) prepared in Example 3 was applied to one side of the slab at a rate of 2.3 kg/m$^{2}$, thereby forming a coating in a thickness of 1 mm. Three days after the spraying, the hardening of the coating was completed, so as to provide a coating having an appearance and properties similar to those of ceramics. The concrete slab having such ceramic-like coating had sufficiently

good water-proofing properties to be usable with a building as a face sheet.

## EXAMPLE 24

Formation (1) of Ceramic-Like Coating on Vertical Concrete Block by Spraying:

A concrete block (500 x 250 x 150 mm) was erected in a nearly vertical position. Using an air-spray gun, coating composition (2) prepared in Example 4 was applied to all surfaces of the block at a rate of 2.20 kg/m$^2$, thereby forming a coating in a thickness of 1.2 mm. Three days after the spaying, the hardening of the coating was completed. Thereafter, a topcoat of an acrylic resin emulsion was applied to cover the concrete block with a coating having an appearance and properties similar to those of ceramics. The concrete block with such ceramic-like coating had a pleasing appearance on all faces and was suitable for use as a constituent element of a fence, postgate or the wall of a building.

## EXAMPLE 25

Formation (2) of Ceramic-Like Coating on Vertical Concrete Block by Spraying:

A concrete block (500 x 250 x 150 mm) was erected in a nearly vertical position. Using an air-spray gun, coating composition (2) prepared in Example 4 was applied to all surfaces of the block at a rate of 1.40 kg/m$^2$. Immediately thereafter, yellow coating composition (6) prepared in Example 8 was applied through an air-less spray gun at a rate of 0.94 kg/m$^2$. Immediately after this second spraying, coating composition (1) prepared in Example 3 was applied through an air-less spray-gun at a rate of 0.7 kg/m$^2$. Three days after the final spraying, the hardening of the coating was completed so as to provide a seemly yellow coating having an appearance and properties similar to those of ceramics. The concrete block having such ceramic-like coating on all surfaces was comparable to the block surface-treated in Example 24 in its applicability as an element of a fence, postgate or the wall of a building.

While the invention has been described in detail and with reference to specific embodiments thereof, it will be apparent to one skilled in the art that various changes and modifications can be made therein without departing from the spirit and scope thereof.

Claims

1.    A coating composition capable of forming a ceramic-like coating, said composition comprising a cement, an ingredient (A) and an ingredient (B), said ingredient (A) comprising:

(1)    an aggregate-forming powder;

(2)    a water-soluble cellulose derivative; and

(3)    a metal salt of a higher fatty acid; and said ingredient (B) comprising a rubber latex.

2.    A composition according to claim 1, wherein the aggregate-forming powder has a particle size distribution such that at least 40 wt% of the powder has particles coarser than 100 mesh and at least 20 wt% of the powder has particles finer than 100 mesh.

3.    A composition according to claim 1, wherein the aggregate-forming powder is selected from the group consisting of granite, marble, serpentine, peridotite, zircon sand, limestone, silica sand, and ceramics.

4.    A composition according to claim 1, wherein the cement is selected from the group consisting of Portland cement, high-early strength cement, moderate heat of hardening cement, white Portland cement, fly ash cement, Portland pozzolane cement, and Portland blast furnace slag cement.

5.    A composition according to claim 1, wherein the water-soluble cellulose derivative is selected from the group consisting of methyl cellulose, ethyl cellulose, carboxymethyl cellulose, cellulose acetate, and mixtures thereof.

6. A composition according to claim 1, wherein the metal salt of a higher fatty acid is selected from the group consisting of calcium stearate, calcium palmitate, calcium laurate, magnesium stearate, magnesium palmitate, magnesium laurate, zinc stearate, zinc palmitate, zinc laurate, lead stearate, lead palmitate, lead laurate, and mixtures thereof.

7. A composition according to claim 1, wherein the rubber latex is selected from the group consisting of a natural rubber latex, styrene-butadiene rubber latex, butadiene rubber latex, isoprene rubber latex, chloroprene rubber latex, acrylonitrile-butadiene rubber latex, acrylic rubber latex, urethane rubber latex, and mixtures thereof.

8. A method of preparing a coating composition which is capable of forming a ceramic-like coating which comprises the steps of mixing together a cement and an ingredient (A) and adding to the resulting mixture an ingredient (B), said ingredient (A) comprising:

(1) an aggregate-forming powder;

(2) a water-soluble cellulose derivative; and

(3) a metal salt of a higher fatty acid; and said ingredient (B) comprising a rubber latex.

9. A method according to claim 8, wherein the aggregate-forming powder has a particle size distribution such that at least 40 wt% of the powder has particles coarser than 100 mesh and at least 20 wt% of the powder has particles finer than 100 mesh.

10. A method according to claim 8, wherein the aggregate-forming powder is selected from the group consisting of granite, marble, serpentine, peridotite, zircon sand, limestone, silica sand, and ceramics.

11. A method according to claim 8, wherein the cement is selected from the group consisting of Portland cement, high-early strength cement, moderate heat of hardening cement, white Portland cement, fly ash cement, Portland pozzolane cement, and Portland blast furnace slag cement.

12. A method according to claim 8, wherein the cellulose derivative is selected from the group consisting of methyl cellulose, ethyl cellulose, carboxymethyl cellulose, cellulose acetate, and mixtures thereof.

13. A method according to claim 8, wherein the metal salt of a higher fatty acid is selected from the group consisting of calcium stearate, calcium palmitate, calcium laurate, magnesium stearate, magnesium palmitate, magnesium laurate, zinc stearate, zinc palmitate, zinc laurate, lead stearate, lead palmitate, lead laurate, and mixtures thereof.

0165469

14. A method according to claim 8, wherein the rubber latex is selected from the group consisting of a natural rubber latex, styrene-butadiene rubber latex, butadiene rubber latex, isoprene rubber latex, chloroprene rubber latex, acrylonitrile-butadiene rubber latex, acrylic rubber latex, urethane rubber latex, and mixtures thereof.

15. A method according to claim 8, wherein the coating mixing further contains a fibrous material selected from the group consisting of Vinylon®, nylon, polyester fiber, polypropylene fiber, polyacrylonitrile fiber, alkali-resistant glass fiber, asbestos, rock wool, metal titanate fiber, wollastonite, and mixtures thereof.

16. A method according to claim 8, wherein the substrate is selected from the group consisting of a concrete product, mortar product, foamed plastic product, Silica Licite®, metal product, glass product, a wall of a building, a floor of a building, and the ceiling of a building.

17. A method according to claim 8, wherein the coating composition is applied to a substrate to form a ceramic-like coating.

18. A method according to claim 17, wherein the ceramic-like coating is further coated with a layer of a paint composition capable of forming a transparent glossy coating, thereby providing a coating having an appearance and properties similar to those of ceramics.

19. A method according to claim 8, wherein the coating composition is applied to a substrate by spraying.